# EUROPEAN PATENT APPLICATION

(11) **EP 2 352 072 A1**
(43) Date of publication of application: **03.08.2011**
(21) Application number: 09821870.4
(22) Date of filing: 13.08.2009
(51) Int. Cl.: G06F 1/28, G06F 11/34, G06Q 50/00

(54) **CALCULATION DEVICE, SYSTEM MANAGEMENT DEVICE, CALCULATION METHOD, AND PROGRAM**

(30) Priority: 20.10.2008 JP 2008269805
(71) Applicant: International Business Machines Corporation, Armonk, NY 10504 (US)
(72) Inventor: TSUMURA Tadashi, Yamato-shi Kanagawa 242-8502 (JP); ICHINOMIYA Hideo, Yamato-shi Kanagawa 242-8502 (JP)
(74) Representative: Roberts, Scott Anthony
(86) International application number: PCT/JP2009/064311
(87) International publication number: WO 2010/047170

(57) **Abstract**

To calculate an index value indicating a processing cost or environmental load of a designated process or user. The present invention provides a calculator device for calculating an index value indicating a processing cost or environmental load in a system having a hardware component used by a plurality of processes or users, comprising an index value acquisition part for acquiring the index value of the hardware component, an observation value acquisition part for acquiring, for each of the plurality of processes or users, at least one observation value changing depending on the use of the hardware component by the process or user, and a calculation part for calculating the use amount of the hardware component by each of the plurality of processes or users, based on the acquired observation value, and calculating the index value by the designated process or user in the hardware component by distributing the index value acquired by the index value acquisition part according to the use amount.

## Description

### Field of the invention

The present invention relates to a calculator device, a system management apparatus, a calculation method and a program for calculating an index value indicating a processing cost or environmental load in a system having a plurality of hardware components in a data center or the like.

### Background of the Invention

In recent years, it has been noted to reduce the power consumption in the data center. The power consumption in the data center can be calculated by measuring the power for every hardware apparatus such as a server or a communication apparatus in the data center and totalizing it, for example.

### Summary of the Invention

By the way, since the data center performs a plurality of different information processes (services) in parallel, it is desirable that the power consumption can be measured for each service. However, since the individual hardware apparatus is shared between a plurality of services in the data center, the power consumption of the data center was difficult to measure for each service.

Thus, an object of the invention is to provide a calculator device, a system management apparatus, a calculation method and a program that can solve the above-mentioned problems. This object can be accomplished by a combination of the features as described in the independent clauses of the claims. Also, the dependent clauses provide the more beneficial specific examples of the invention.

In order to accomplish the above object, according to a first aspect of the invention, there is a calculator device for calculating an index value indicating a processing cost or environmental load in a system having a hardware component used by a plurality of processes or users, comprising an index value acquisition part for acquiring the index value of the hardware component, an observation value acquisition part for acquiring, for each of the plurality of processes or users, at least one observation value changing depending on the use of the hardware component by the process or user, and a calculation part for calculating the use amount of the hardware component by each of the plurality of processes or users, based on the acquired observation value, and calculating the index value by the designated process or user in the hardware component by distributing the index value acquired by the index value acquisition part according to the use amount. Further, a system management apparatus having this calculator device, and a calculation method and a program for enabling a computer to function as the calculator device are provided.

According to a second aspect of the invention, there is provided a calculator device for calculating an index value indicating a processing cost or environmental load in a system having a plurality of hardware components used by a plurality of processes or users, comprising a specification part for specifying which hardware component of the plurality of hardware components the designated process or user uses, an index value acquisition part for acquiring the index value of each of the specified hardware components, and a calculation part for calculating the index value for the designated process or user in the system by totaling the index value of each of the specified hardware components.

The above outline of the invention does not list all the requisite features of the invention. Also, a sub-combination of these feature groups can become the invention.

### Brief Description of the Drawings

Figure 1 shows the configuration of the system management apparatus 10 according to the present invention, together with a data center;
Figure 2 shows one example of data accumulated in the accumulating device 32;
Figure 3 shows one example of data managed by the configuration management database 20;
Figure 4 shows a functional configuration of the calculator device 50;
Figure 5 shows one example of the processing flow of the calculator device 50;
Figure 6 shows one example of the detailed processing flow of step S104 in Figure 5;
Figure 7 shows one example of an association history managed by the configuration management database 20;
Figure 8 shows the configuration of the calculator device 50 according to a modification of the embodiment; and
Figure 9 shows one example of the hardware configuration of the computer 1900 according to the embodiment of the invention.

### Description of Symbols

- 10: system management apparatus
- 20: configuration management database
- 22: discovery device
- 24: process control device
- 30: monitor device
- 32: accumulating device
- 34: output device
- 50: calculator device
- 54: input part
- 56: specification part
- 58: index value acquisition part
- 60: observation value acquisition part
- 62: calculation part
- 64: output part
- 70: period division part
- 200: data center
- 1900: computer
- 2000: CPU
- 2010: ROM
- 2020: RAM
- 2030: communication interface
- 2040: hard disk drive
- 2050: flexible disk drive
- 2060: CD-ROM drive
- 2070: input/output chip
- 2075: graphic controller
- 2080: display device
- 2082: host controller
- 2084: input/output controller
- 2090: flexible disk
- 2095: CD-ROM

### Detailed Description of the Drawings

The present invention will be described below in connection with the embodiments of the invention, but the following embodiments do not limit the invention as defined in the claims. Also, all of the combinations of the features as described in the embodiments are not necessarily requisite to solving means of the invention.

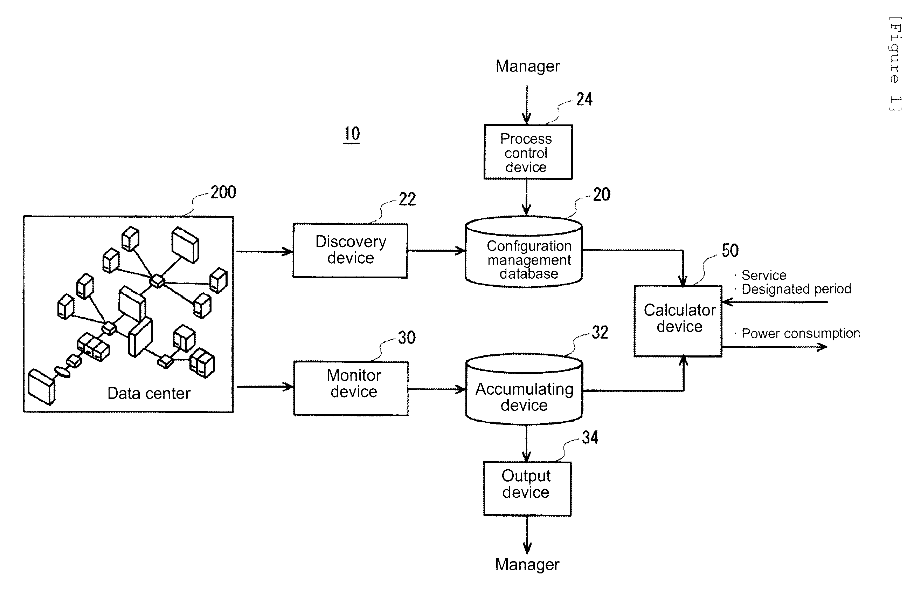

Figure 1 shows the configuration of a system management apparatus 10 according to the embodiment, together with a data center 200. The data center 200 is a system having a plurality of hardware components (hereinafter a hardware component is also referred to as a hardware configuration item or a hardware CI) such as a plurality of servers or network apparatuses to perform an information process (i.e., service). The services performed in the data center 200 include a process for providing a web page on the Internet, a process for performing a business application such as an accounting process, and a process for performing a series of plural information processes (transactions), as one example.

Such data center 200 can perform a plurality of services in parallel. And each service performed in the data center 200 uses one or more hardware components provided in the data center 200 in the implementation. Herein, the phrase "the service uses the hardware component" means that the service is performed by operating the hardware component. Also, each hardware component provided in the data center 200 may be shared by the plurality of services. That is, each hardware component provided in the data center 200 may be used by one or more services in some cases.

The system management apparatus 10 comprises a configuration management database 20, a discovery device 22, a process control device 24, a monitor device 30, an accumulating device 32, an output device 34 and a calculator device 50. The component database 20 stores the attribute of component within the data center 200, association between the components, a history of association as a database. The component within the data center 200 may be a hardware CI within the data center 200, middleware operating on the hardware CI, an operation system, an application program and a service, for example.

The discovery device 22 detects whether or not the component within the data center 200 and the association between the components are changed. The discovery device 22 stores the attribute of a new component and a change history in the component database 20 if detecting a change.

The process control device 24 receives an input from the manager, and manages information stored within the configuration management database 20. The process control device 24 controls the data center 200 to be configured in accordance with an ITIL (Information Technology Infrastructure Library) of the international standards for IT management, as one example.

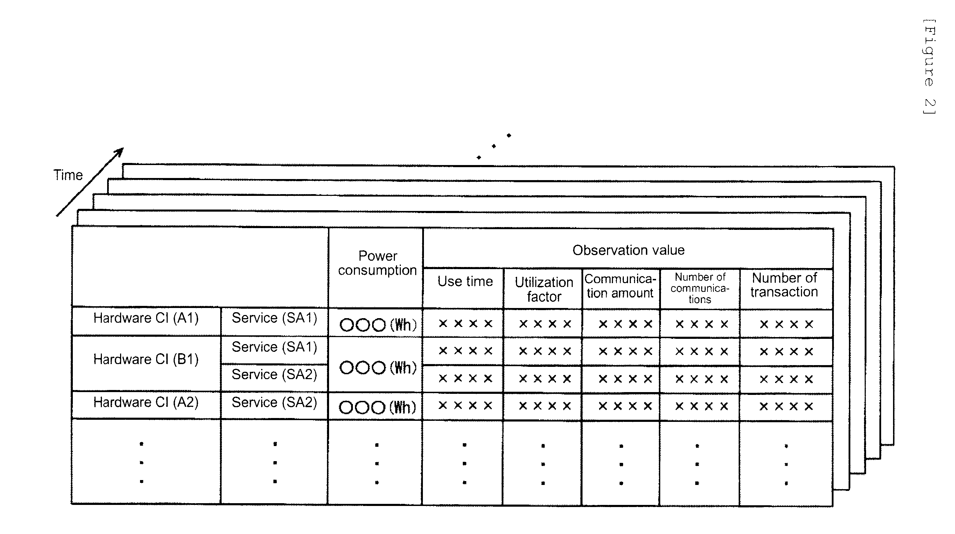

The monitor device 30 observes the power consumption of each of a plurality of hardware CIs within the data center 200. Further, the monitor device 30 observes, for each of the plurality of hardware CIs within the data center 200, at least one observation value that changes as the service uses the hardware CI for each service using the hardware CI. The observation value will be further described later in connection with Figure 2. The monitor device 30 may observe the power consumption of each of the plurality of hardware CIs and the observation value at predetermined time units.

The accumulating device 32 accumulates the power consumption observed for each hardware CI and the observation value observed for each hardware CI and each service successively in time series. The accumulating device 32 may be a data warehouse, as one example. The output device 34 outputs the data accumulated in the accumulating device 32 to the manager.

For the calculator device 50, any one of a plurality of services performed in the data center 200 is designated from the manager or an external program. Further, for the calculator device 50, the period is designated from the manager or an external program. And the calculator device 50 calculates the power consumption by the designated service in the data center 200 within a designated period and outputs it.

The system management apparatus 10 with such a configuration can manage the data center 200. Further, the system management apparatus 10 can calculate the power consumption by the designated service among the power consumed in the data center 200.

Though in this embodiment, the system management apparatus 10 calculates the power consumption by the designated service in the data center 200, the system management apparatus 10 may alternatively calculate the power consumption used by the designated user among the total power consumption in the data center 200 if the data center 200 is employed in parallel by a plurality of users. Also, the system management apparatus 10 may calculate the power consumption of a system having a plurality of hardware components, other than the data center 200.

Figure 2 shows one example of data accumulated in the accumulating device 32. The accumulating device 32 stores, for each hardware CI provided in the data center 200, the power consumption of the hardware CI observed by the monitor device 30 in fixed period units as one example. Thereby, the accumulating device 32 can provide the power consumption of the designated hardware CI in the designated period. Also, the accumulating device 32 stores, for each hardware CI provided in the data center 200 and for each service using the hardware CI, at least one observation value observed by the monitor device 30 in fixed period units as one example. Thereby, the accumulating device 32 can provide the observation value of the designated service using the designated hardware CI in the designated period.

Herein, the observation value is a parameter with the value changing as the service uses the hardware CI, and identifiable and observable for each service. The monitor device 30 may observe the use time and the utilization factor of the hardware CI with the service (e.g., the use time and the utilization factor of the CPU of the hardware CI with the service) as the observation value as one example. For example, the monitor device 30 can identify and observe the use time and the utilization factor of the hardware CI for each service by detecting the kind of program or task performed by the hardware CI of object.

Also, the monitor device 30 may observe the communication amount or the number of communications for the hardware CI with the service as the observation value as one example. Also, the monitor device 30 may observe the number of transactions received by the hardware CI according to the use of the service as the observation value as one example. The monitor device 30 can identify and observe the communication amount, the number of communications or the number of transactions of the hardware CI for each service by detecting the header information of packet exchanged by the hardware CI, for example.

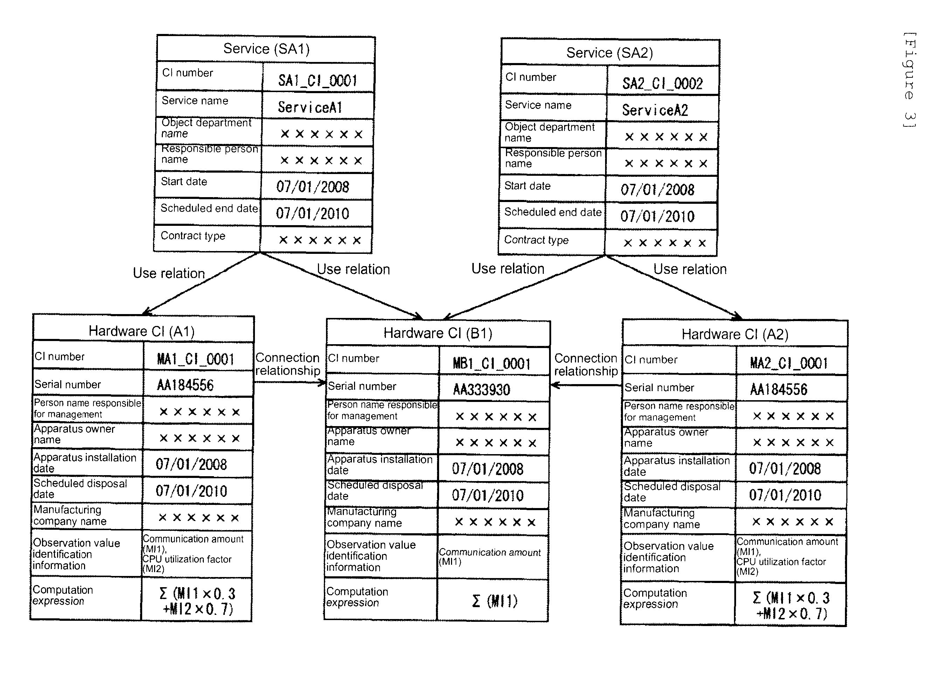

Figure 3 shows one example of data managed by the configuration management database 20. The configuration management database 20 stores, for each component within the data center 200, the attribute of the concerned component. The configuration management database 20 stores, for each component of the service, the attributes such as a CI number, a service name, an object department name, a responsible person name, a start date, a scheduled end date, and a contract type, for example. The CI number is the number intrinsic to each component. Also, the configuration management database 20 stores, for each hardware CI, the attributes such as a CI number, a serial number, a person name responsible for management, an apparatus owner name, an apparatus installation date, a scheduled disposal date, a manufacturing company name, an observation value identification information and a computation expression.

Herein, the configuration management database 20 stores the computation expression and the observation value identification information for each hardware CI provided in the data center 200. The computation expression is the expression for obtaining the use amount of the hardware CI with one service. In this example, the computation expression obtains a factor representing the power amount consumed when one service uses the concerned hardware CI as the use amount.

Also, this computation expression has at least one observation value of one service of the concerned hardware CI as the input parameter. For example, the computation expression of the hardware CI (A1) as shown in Figure 3 has the communication amount (MI1) and the utilization factor (MI2) as the input parameters. And the computation expression of the hardware CI (A1) as shown in Figure 3 calculates the value of adding the communication amount (MI1) of the service multiplied by 0.3 and the CPU utilization factor (MI2) of the service multiplied by 0.7 as the use amount.

Also, the computation expression may have the different contents of the expression depending on each hardware CI. The computation expression of each hardware CI is preset by the manager of the system management apparatus 10 or the manufacturer of the hardware CI so that the computation result (i.e., use amount) may be the value according to a predetermined metric (power consumption in this example) of the hardware CI. For example, for an apparatus in which the operation power of the CPU is low because the clock cycle is relatively low, but the operation power of the communication device is high because the communication is performed at relatively high speed, the computation expression of adding the value of the CPU utilization factor multiplied by a small constant and the value of the communication amount multiplied by a large constant is set up.

Also, the observation value identification information identifies one or more observation values that become the input parameter of the computation expression for the hardware CI. That is, the observation value identification information identifies one or more observation values for use in the computation expression. For example, since the hardware CI (A1) as shown in Figure 3 employs the communication amount (MI1) and the CPU utilization factor (MI2) as the input parameters of the computation expression, information identifying the communication amount (MI1) and the CPU utilization factor (MI2) is described in the observation value identification information.

Also, the configuration management database 20 stores the association between the components. The configuration management database 20 stores, for each service performed in the data center 200, the association representing one or more hardware CIs for use with the service (i.e., association representing the usage relationship between the service and the hardware CI) as one example.

Also, the configuration management database 20 stores, for each hardware CI provided in the data center 200, the association representing other one or more hardware CIs electrically connected with the concerned hardware CI (i.e., association representing the connection relationship between the hardware CIs) as one example. Also, the configuration management database 20 stores the association of the hardware CI with the operation system and the association of the operation system with the application program as one example.

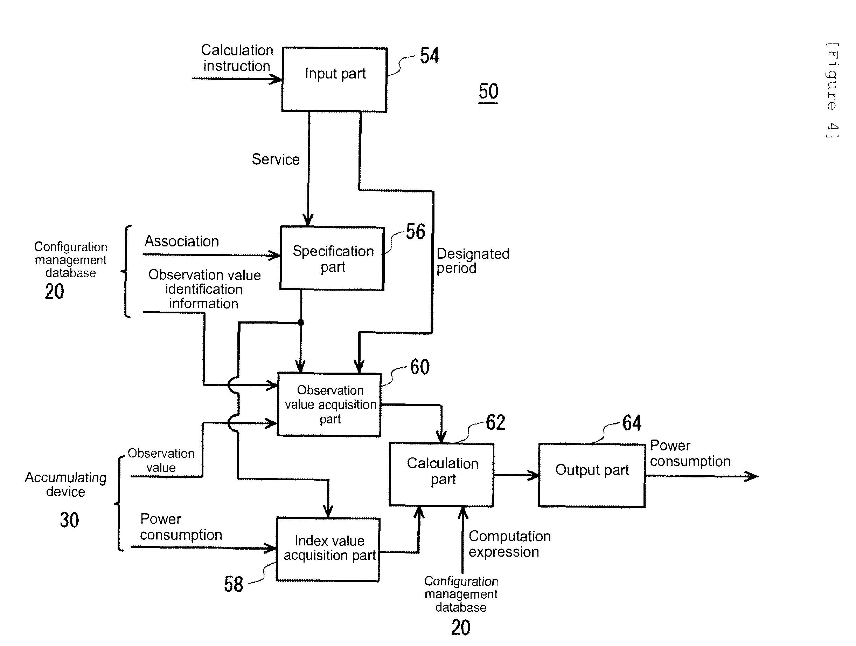

Figure 4 shows a functional configuration of the calculator device 50. The calculator device 50 is realized by a program running on the computer as one example.

The calculator device 50 comprises an input part 54, a specification part 56, an index value acquisition part 58, an observation value acquisition part 60, a calculation part 62 and an output part 64. The input part 54 accepts a calculation instruction of calculating the power consumption for the designated service in the designated period from the user or an external program.

The specification part 56 specifies which hardware CI of the plurality of hardware CIs within the data center 200 the designated service uses by gaining access to the configuration management database 20 storing the association of each service with each hardware CI. Further, the specification part 56 specifies by which service performed in the data center 200 the designated hardware CI is used by gaining access to the configuration management database 20.

The index value acquisition part 58 acquires the power consumption of each of one or more hardware CIs specified by the specification part 56 by gaining access to the accumulating device 32. The index value acquisition part 58 may acquire the power consumption in the designated period from the accumulating device 32 storing the power consumption in time series of predetermined time units as one example.

The observation value acquisition part 60 acquires the observation value identification information of each of one or more hardware CIs specified by the specification part 56 by gaining access to the configuration management database 20. That is, the observation value acquisition part 60 acquires information identifying one or more observation values for use in the computation expression.

And the observation value acquisition part 60 acquires the observation value identified by the observation value identification information for each of one or more services in each of one or more hardware CIs specified by the specification part 56 by gaining access to the accumulating device 32. That is, the observation value acquisition part 60 acquires, for each service using the hardware CI in each hardware CI specified by the specification part 56, one or more observation values for use in the computation expression for the hardware CI. The observation value acquisition part 60 may acquire the parameter for use in the computation expression among the use time, the utilization factor, the communication amount, the number of communications of the hardware CI with the service, and the number of transactions received by the hardware CI as the observation value as one example. It is noted that the index value acquisition part 58 may acquire the observation value in the designated period from the accumulating device 32 storing the observation value in time series of predetermined time units as one example.

The calculation part 62 acquires the computation expression for each hardware CI specified by the specification part 56 by gaining access to the configuration management database 20. And the calculation part 62 calculates the use amount of the hardware CI with each of one or more services, using the observation value of each of plural services using the acquired computation expression and the hardware CI.

Further, the calculation part 62 calculates, for each hardware CI specified by the specification part 56, the power consumption with the designated service in the hardware CI by distributing the power consumption acquired by the index value acquisition part 58 according to a distribution ratio based on the use amount. And the calculation part 62 calculates the power consumption with the designated service in the data center 200 by totaling the power consumption with the designated service for each hardware CI specified by the specification part 56. The output part 64 outputs the power consumption with the designated service in the data center 200, which is calculated by the calculation part 62, to the user or an external program.

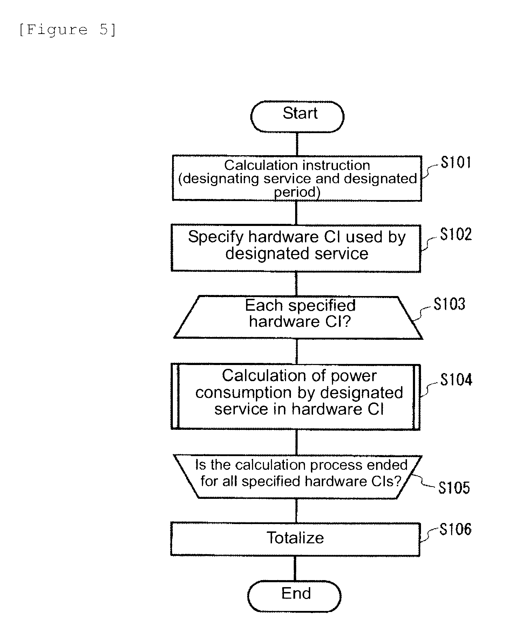

Figure 5 shows one example of the processing flow of the calculator device 50. First of all, the input part 54 accepts a calculation instruction of calculating the power consumption with the designated service in the designated period from the user or the external program (S101).

Subsequently, the specification part 56 refers to the association of the designated service with each hardware CI by gaining access to the configuration management database 20 upon accepting the calculation instruction in the input part 54. And the specification part 56 specifies which hardware CI of the plurality of hardware CIs within the data center 200 the designated service uses (S102).

Subsequently, the specification part 56 performs the processing of step S104 for each of one or more specified hardware CIs (S103, S105). At step S104, the calculation part 62 calculates the power consumption with the designated service for one hardware CI.

If the processing of step S104 is ended for all the specified hardware CIs (S105), then the calculation part 62 totals the power consumption with the designated service for each of the specified hardware CIs (S106). And the output part 64 outputs the total power consumption as the power consumption with the designated service in the data center 200 to the user or the external program.

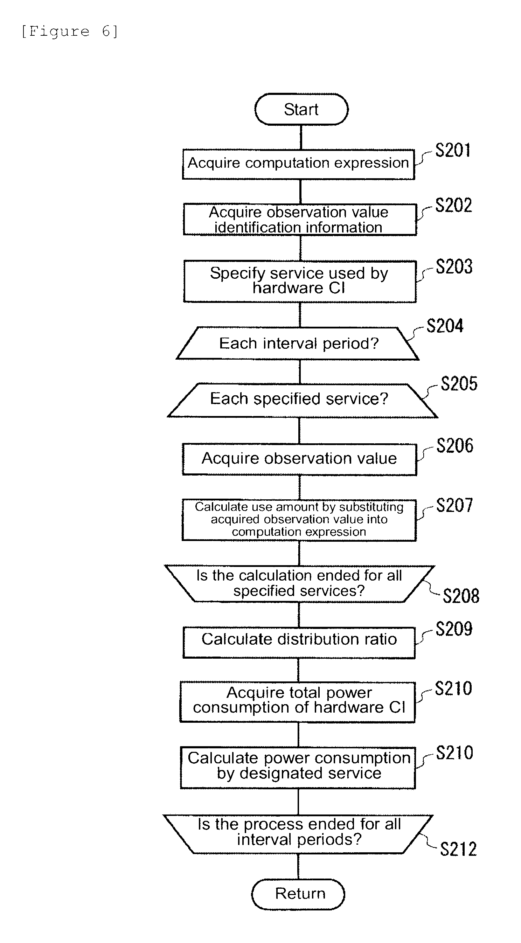

Figure 6 shows one example of the detailed processing flow of step S104 in Figure 5. First of all, the calculation part 62 acquires the computation expression for the concerned hardware CI by gaining access to the configuration management database 20 to refer to the attribute of the concerned hardware CI (S201). Subsequently, the observation value acquisition part 60 acquires the observation value identification information of the concerned hardware CI by gaining access to the configuration management database 20 to refer to the attribute of the concerned hardware CI (S202).

Subsequently, the specification part 56 specifies by which service the concerned hardware CI is used by gaining access to the configuration management database 20 to refer to the association of the concerned hardware CI with the service (S203). Subsequently, the specification part 56 repeats the processing from step S205 to step S211 for every interval period into which the designated period is divided at every predetermined time (S204, S212). It is noted that the interval period may be the period determined according to the time unit of the power consumption and each observation value stored in time series in the accumulating device 32.

Subsequently, the specification part 56 causes the observation value acquisition part 60 and the calculation part 62 to perform the processing of the next steps S206 and S207 for each service designated at step S203. At step S206, the observation value acquisition part 60 acquires at least one observation value identified by the observation value identification information and observed in the concerned interval period by gaining access to the accumulating device 32. Subsequently, at step S207, the calculation part 62 performs the calculation of substituting the observation value acquired at step S206 into the input parameter of the computed value acquired at step S201. Thereby, the calculation part 62 can calculate the use amount of the hardware CI with the service in the interval period.

If the processing of steps S206 and S207 is ended for all the specified services (S208), then the calculation part 62 obtains the distribution ratio for calculating the power consumption with the designated service in the hardware CI from the total power consumption of the hardware CI (S209). More specifically, the calculation part 62 calculates the percentage of the use amount of the designated one service to the total use amount of the specified services as the distribution ratio.

Subsequently, the index value acquisition part 58 acquires the total power consumption of the hardware CI observed in the interval period by gaining access to the accumulating device 32 (S210). Subsequently, the calculation part 62 distributes the total power consumption of the hardware CI in the interval period at the distribution ratio. That is, the calculation part 62 multiplies the total power consumption of the hardware CI in the interval period acquired by the index value acquisition part 58 at step S210 by the distribution ratio. Thereby, the calculation part 62 can calculate the power consumption of the hardware CI with the designated service in the interval period (S211).

And if the process from step S205 to step S211 is ended for all the interval periods (S212), the specification part 56 returns the operation to the step S104 in Figure 5. In this case, the calculation part 62 may return the total value of power consumption calculated in every interval period to the step S104, or may store the power consumption calculated in every interval period in an array or the like and return it to the

### step S104.

It is noted that the calculation part 62 may have the power consumption acquired by the index value acquisition part 58 as the power consumption of the hardware CI with the designated service at step S211 without performing the process from step S205 to step S209 for the hardware CI exclusively used by the specific service. In this case, the calculation part 62 performs the process from step S205 to step S209 for the hardware CI shared by two or more services and obtains the power consumption of the hardware CI with the designated service by distributing the power consumption acquired by the index value acquisition part 58 at the distribution ratio according to the use amount at step S211. Also, in this case, the specification part 56 may judge the hardware CI associated with the single service as the hardware CI exclusively used by the designated service and judge the hardware CI associated with two or more services as the hardware CI shared by two or more services.

In the above way, the system management apparatus 10 can calculate the power consumption of the data center 200 for each service. Also, the system management apparatus 10 can calculate the power consumption for each service, and therefore can calculate the converted amount of emissions of CO₂ from the calculated power consumption.

It is noted that the data center 200 is shared among a plurality of users, for example. Accordingly, the system management apparatus 10 may perform each process, which is performed for each service, further for each user. Thereby, the system management apparatus 10 can calculate the power consumption of the data center 200 for each user, in addition to or instead of calculating the power consumption of the data center 200 for each service.

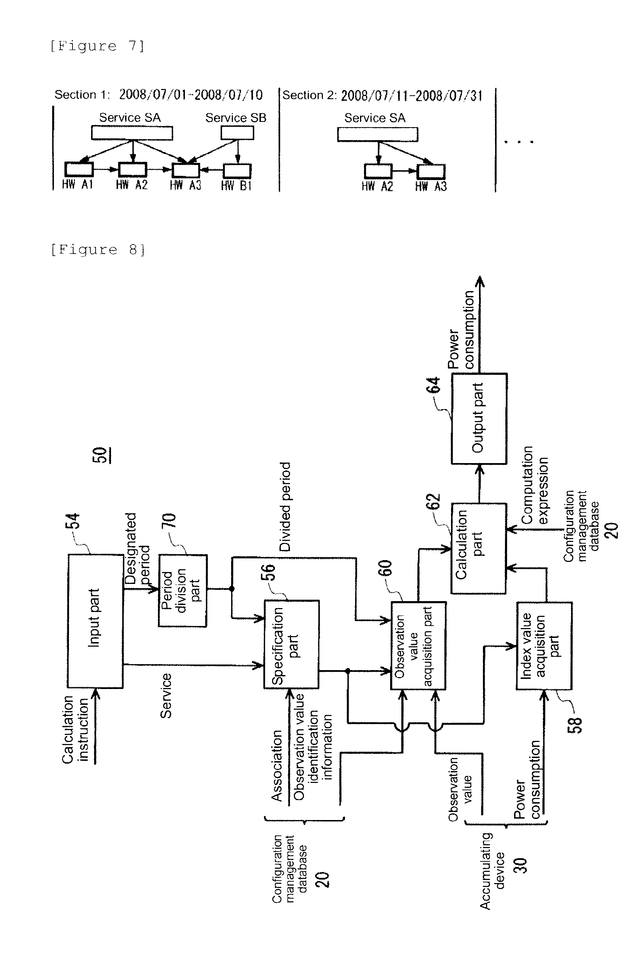

Figure 7 shows one example of an association history managed by the configuration management database 20. The configuration management database 20 stores a history of association between the components. The configuration management database 20 stores, for each service performed in the data center 200, the association history regarding the one or more hardware CIs used by the concerned service as one example, as shown in Figure 7. Further, the configuration management database 20 stores the time specifying the change time of the association as the association history.

Figure 8 shows the configuration of the calculator device 50 according to a modification of the embodiment. Since the calculator device 50 according to the modification adopts substantially the same configuration and functions as the calculator device 50 as shown in Figure 4, the same or like parts in the configuration and functions are designated by the same numerals as the parts provided for the calculator device 50 as shown in Figure 4, and the explanation is omitted except for the following different points.

The calculator device 50 according to the modification further comprises a period division part 70. The period division part 70 judges whether or not the association of the hardware CI with the designated service is changed within the designated period by gaining access to the configuration management database 20 upon receiving a calculation instruction of calculating the power consumption for the designated service in the input designation period. The period division part 70 allows each member provided for the calculator device 50 to perform the same process as for the calculator device 50 as shown in Figure 4, if the association of the hardware CI with the designated service is not changed within the designated period.

Also, the period division part 70 divides the designated period into a plurality of divided periods in which the association of the hardware CI with the designated service is mutually different, if the association of the hardware CI with the designated service is changed within the designated period. And the period division part 70 allows each member provided for the calculator device 50 to perform the same process in each divided period as the process performed for the designated period.

That is, in this case, the specification part 56 specifies which hardware CI of the plurality of hardware CIs the designated service uses in each divided period. Further, the specification part 56 specifies by which service each of the specified hardware CIs is used.

Also, the index value acquisition part 58 acquires the power consumption of each of the specified hardware CIs in each divided period. Also, the observation value acquisition part 60 acquires, for each of one or more specified services in each of the specified hardware CIs in each divided period, at least one observation value that changes depending on the use of the hardware CI with the concerned service. Also, the calculation part 62 calculates the power consumption of each of the specified hardware CIs with the designated service in each divided period, and calculates the power consumption with the designated service in the data center 200 by totaling the calculated power consumption.

And the calculation part 62 calculates the power consumption with the designated service in the designated period by totaling the power consumption calculated in each divided period. Thereby, with the calculator device 60 according to the modification, the power consumption of the data center 200 can be calculated for each service even in the period where the component within the data center 200 is changed.

Though the present invention has been described above using the embodiment, the technical range of the invention is not limited to the range as described in the above embodiments. It is apparent to those skilled in the art that various changes or improvements may be made to the above embodiments. It will be apparent from the description of claims that the forms with such changes or improvements may be also included in the technical range of the invention.

For example, the calculator device 50 may calculate the index value indicating a processing cost or environmental load by the process or the user in the data center 200, instead of calculating the power consumption in the data center 200. Herein, the processing cost may be expenditure such as personal expenditure and energy spent in the operation and maintenance of the data center 200, for example. Also, the index value indicating the environmental load may be the index value indicating the amount of emissions of CO₂ and the quantity of heat discharged according to the operation of the data center 200, for example.

And in such a case, the index value acquisition part 58 acquires the index value indicating the processing cost or environmental load, instead of the power consumption, from the database managing the index value for each hardware component. And the calculation part 62 makes the distribution for the index value, instead of the power consumption, at the ratio calculated using the computation expression. Thereby, the calculator device 50 can calculate the index value indicating the processing cost or environmental load in the data center 200 for each process or user.

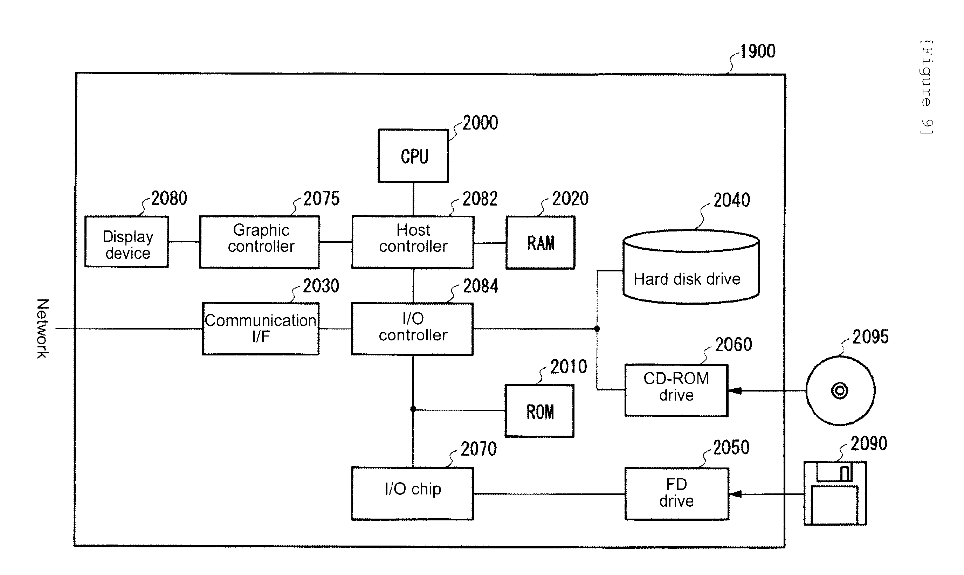

Figure 9 shows one example of the hardware configuration of a computer 1900 according to this embodiment. The computer 1900 according to this embodiment comprises a CPU peripheral part having a CPU 2000, a RAM 2020, a graphic controller 2075 and a display device 2080 that are interconnected by a host controller 2082, an input/output part having a communication interface 2030, a hard disk drive 2040, and a CD-ROM drive 2060 that are connected to the host controller 2082 by an input/output controller 2084, and a legacy input/output part having a ROM 2010, a flexible disk drive 2050 and an input/output chip 2070 that are connected to the input/output controller 2084.

The host controller 2082 connects the RAM 2020 with the CPU 2000 accessing the RAM 2020 at high transfer rate and the graphic controller 2075. The CPU 2000 operates based on a program stored in the ROM 2010 and the RAM 2020 and controls each component. The graphic controller 2075 acquires the image data generated on a frame buffer that the CPU 2000 provides within the RAM 2020 and displays it on the display device 2080. Alternatively, the graphic controller 2075 may comprise internally the frame buffer for storing the image data generated by the CPU 2000.

The input/output controller 2084 connects the host controller 2082 with the communication interface 2030, the hard disk drive 2040 and the CD-ROM drive 2060 that are relatively fast input/output devices. The communication interface 2030 communicates with other apparatuses via a network. The hard disk drive 2040 stores the program and data used by the CPU 2000 within the computer 1900. The CD-ROM drive 2060 reads the program or data from the CD-ROM 2095 and provides it via the RAM 2020 to the hard disk drive 2040.

Also, the input/output controller 2084 is connected to the ROM 2010, the flexible disk drive 2050 and the input/output chip 2070 that are the input/output devices having relatively low speed. The ROM 2010 stores a boot program executed when the computer 1900 is started and/or a program dependent on the hardware of the computer 1900. The flexible disk drive 2050 reads the program or data from the flexible disk 2090 and provides it via the RAM 2020 to the hard disk drive 2040. The input/output chip 2070 connects the flexible disk drive 2050 to the input/output controller 2084, and connects various kinds of input/output device to the input/output controller 2084 via a parallel port, a serial port, a keyboard port or a mouse port.

The program provided via the RAM 2020 to the hard disk drive 2040 is stored in a recording medium such as the flexible disk 2090, the CD-ROM 2095 or an IC card and provided by the user. The program is read from the recording medium, installed in the hard disk drive 2040 within the computer 1900 via the RAM 2020, and executed on the CPU 2000.

A program, which is installed in the computer 1900, for enabling the computer to function as the calculator device 50 comprises an input module, a specific module, an index value acquisition module, an observation value acquisition module, a calculation module, and an output module. These programs or modules operates on the CPU 2000 to enable the computer 1900 to function as the input part 54, the specification part 56, the index value acquisition part 58, the observation value acquisition part 60, the calculation part 62 and the output part 64.

An information process described in these programs is read into the computer 1900 and functions as the input part 54, the specification part 56, the index value acquisition part 58, the observation value acquisition part 60, the calculation part 62 and the output part 64 that are specific means in which the software and various kinds of hardware resources cooperate. And these specific means constructs the calculator device 50 inherent to the use purpose by making the operation or processing of the information according to the use purpose of the computer 1900 in this embodiment.

As one example, when the communication is performed between the computer 1900 and the external apparatus, the CPU 2000 executes a communication program loaded into the RAM 2020, and instructs the communication interface 2030 to perform a communication process based on the processing contents described in the communication program. The communication interface 2030 reads the send data stored in a transmission buffer area provided in the storage device such as the RAM 2020, the hard disk drive 2040, the flexible disk 2090 or the CD-ROM 2095, and sends it to the network, or writes the receive data received from the network into the a reception buffer area provided in the storage device under the control of the CPU 2000. In this way, the communication interface 2030 may transfer the send or receive data to or from the storage device by a DMA (Direct Memory Access) method. Alternatively, the CPU 2000 may read the data from the storage device or the communication interface 2030 of transfer source and write it into the communication interface 2030 or the storage device of transfer destination to transfer the send or receive data.

Also, the CPU 2000 reads all or necessary part of a file or database stored in an external storage device such as the hard disk drive 2040, the CD-ROM drive 2060 (CD-ROM 2095) or the flexible disk drive 2050 (flexible disk 2090) into the RAM 2020 by the DMA transfer and performs various kinds of process for the data on the RAM 2020. And the CPU 2000 writes back the data after processing into the external storage device by the DMA transfer. In such process, the RAM 2020 can be regarded as temporarily holding the contents of the external storage device, whereby the RAM 2020 and the external storage device are genetically referred to as memory, storage part or storage device in this embodiment. Various kinds of information such as program, data, table and database in this embodiment are stored in such storage device, and subjected to the information processing. It is noted that the CPU 2000 may hold a part of the RAM 2020 in a cache memory, and read or write the data on the cache memory. In such a form, since the cache memory bears a part of the function of the RAM 2020, the cache memory may be also included in the RAM 2020, memory and/or storage device without distinction in this embodiment.

Also, the CPU 2000 performs various kinds of processes including various kinds of arithmetic operation, processing of information, conditional judgment, and search or replacement of information specified in an instruction code of the program as described in this embodiment for the data read from the RAM 2020 and writes back the data into the RAM 2020. For example, the CPU 2000 judges whether or not the condition is satisfied that various kinds of variable as indicated in this embodiment is larger than, smaller than, larger than or equal to, smaller than or equal to, or equal to the other variables or constants in making the conditional judgment, and branches to a different instruction code or calls a subroutine if the condition is satisfied (or not satisfied).

Also, the CPU 2000 can search for information stored in the file or database within the storage device. For example, in the case of storing a plurality of entries in which the attribute value of the first attribute is associated with the attribute value of the second attribute in the storage device, the CPU 2000 searches for an entry in which the attribute value of the first attribute is matched with the designated condition from among the plurality of entries stored in the storage device, and reads the attribute value of the second attribute stored in the entry, thereby obtaining the attribute value of the second attribute associated with the first attribute in which the predetermined condition is satisfied.

The program or module as shown above may be stored in an external recording medium. Examples of the recording medium include the flexible disk 2090, the CD-ROM 2095, an optical recording medium, such as DVD or CD, a magneto-optical recording medium, such as MO, a tape medium, and a semiconductor memory such as IC card. Also, the program may be provided via the network to the computer 1900, using the storage device such as hard disk or RAM provided in a server system connected to the dedicated communication network or the Internet as the recording medium.

It should be noted that an execution sequence of each process such as operation, procedure, step or stage in the apparatus, system, program and method as described in the claims, specification and drawings is not clearly expressed as "before" or "ahead" in particular, and may be implemented in any sequence unless the output of the previous process is used in the succeeding process. Even if the operation flow in the claims, specification and drawings is explained using "first of all", "next" and so on, for the sake of convenience, it is not meant that the operation must be performed in this sequence.

## Claims

1. A calculator device for calculating an index value indicating a processing cost or environmental load in a system having a hardware component used by a plurality of processes or users, comprising:
an index value acquisition part for acquiring the index value of said hardware component;
an observation value acquisition part for acquiring, for each of said plurality of processes or users, at least one observation value changing depending on the use of said hardware component by said process or user; and
a calculation part for calculating the use amount of said hardware component by each of said plurality of processes or users, based on said acquired observation value, and calculating the index value by the designated process or user in said hardware component by distributing the index value acquired by said index value acquisition part according to said use amount.

2. The calculator device according to claim 1, wherein said calculation part acquires a computation expression by gaining access to a configuration management database storing said computation expression for obtaining the use amount of said hardware component by one process or user using at least one said observation value, calculates the use amount of said hardware component by each of said plurality of processes or users using said acquired computation expression and said observation value of each of said plurality of processes or users, and calculates said index value by the designated process or user in said hardware component by distributing said index value at a distribution ratio based on said use amount.

3. The calculator device according to claim 2, wherein said configuration management database stores observation value identification information identifying said one or more observation values that become an input parameter of said computation expression, and said observation value acquisition part acquires said observation value identification information by gaining access to said configuration management database, and acquires said observation value identified by said observation value identification information in said hardware component.

4. The calculator device according to any one of claims 1 to 3, wherein said observation value acquisition part acquires at least one of the use time, the utilization factor, the communication amount, and the number of communications for said hardware component by the process or user, and the number of transactions received by said hardware component as said observation value.

5. The calculator device according to any one of claims 1 to 4, wherein said system has said plurality of hardware components, and said calculator device further comprises a specification part for specifying which hardware component of said plurality of hardware components the designated process or user uses, in which said calculation part makes the index value acquired by said index value acquisition part the index value by the designated process or user in said hardware component for the hardware component exclusively used by said designated process or user, or makes the index value acquired by said index value acquisition part and distributed at the distribution ratio based on said use amount said index value by the designated process or user in said hardware component for the hardware component shared by two or more processes or users, and calculates the index value for the designated process or user in said system by totaling the index value for said hardware component used by the designated process or user.

6. The calculator device according to claim 5, wherein said specification part gains access to a configuration management database storing the association of each hardware component with each process or user, and judges the hardware component associated with the single process or user as the hardware component exclusively used by said designated process or user or judges the hardware component associated with two or more processes or users as the hardware component shared by said two or more processes or users.

7. The calculator device according to claim 6, wherein said configuration management database stores a history of associating each hardware component with each process or user, and said calculator device further comprises a period division part for dividing said designated period into a plurality of divided periods in which the association of the hardware component with the designated process or user is mutually different, if the association of the hardware component with the designated process or user within said designated period is changed by gaining access to said configuration management database upon receiving a calculation instruction of calculating the index value for the designated process or user in an input designated period, in which said specification part specifies which hardware component of said plurality of hardware components the designated process or user uses in each said divided period, and said calculation part calculates the index value for the designated process or user in said system in each said divided period.

8. A calculator device for calculating an index value indicating a processing cost or environmental load in a system having a plurality of hardware components used by a plurality of processes or users, comprising:
an input part for receiving a calculation instruction for calculating the index value for a designated process or user in an input designated period;
a period division part for dividing said designated period into a plurality of divided periods in which the association of the hardware component with the designated process or user is mutually different, if the association of the hardware component with the designated process or user within said designated period is changed by gaining access to a configuration management database storing a history of associating each hardware component with each process or user;
a specification part for specifying which hardware component of said plurality of hardware components the designated process or user uses in each said divided period, and specifying by which process or user each designated hardware component is used;
an index value acquisition part for acquiring the index value for each specified hardware component in each said divided period;
an observation value acquisition part for acquiring, for each of said one or more processes or users specified in each specified hardware component, at least one observation value changing depending on the use of said hardware component by said process or user in each said divided period; and
a calculation part for calculating the index value by the designated process or user in each specified hardware component in each said divided period, and calculating the index value for the designated process or user in said system by totaling the calculated index values;
wherein said configuration management database stores a computation expression for obtaining the use amount of said hardware component by one process or user using at least one said observation value associated with each of said plurality of hardware components provided in said system and the observation value identification information identifying one or more said observation values that become an input parameter of said computation expression;
said observation value acquisition part, for each of the specified hardware components, acquires said observation value identification information by gaining access to said configuration management database, and acquires said observation value identified by said observation value identification information of each of the specified one or more processes or users in said hardware component; and
said calculation part, for each of the specified hardware components, acquires said computation expression by gaining access to said component database, and calculates the use amount of said hardware component by each of said one or more processes or users using said acquired computation expression and said observation value of each of the specified one or more processes or users; and
calculates said index value by the designated process or user in said hardware component by distributing said index value at a distribution ratio based on said use amount.

9. A system management apparatus for managing a system having a hardware component used by a plurality of processes or users, comprising:
a component database; and
a calculator device for calculating an index value indicating a processing cost or environmental load in said system;
said calculator device comprising:
an index value acquisition part for acquiring the index value for said hardware component;
an observation value acquisition part for acquiring, for each of said plurality of processes or users, at least one observation value changing depending on the use of said hardware component by said process or user; and
a calculation part for calculating the use amount of said hardware component by each of said plurality of processes or users based on said acquired observation value and calculating the index value by the designated process or user in said hardware component by distributing the index value acquired by said index value acquisition part in accordance with said use amount;
wherein said component database stores a computation expression for obtaining the use amount of said hardware component by one process or user using at least one said observation value associated with said hardware component; and
said calculation part acquires said computation expression by gaining access to said configuration management database;
calculates the use amount of said hardware component by each of said plurality of processes or users using said acquired computation expression and said observation value of each of said plurality of processes or users; and
calculates said index value by the designated process or user in said hardware component by distributing said index value at a distribution ratio based on said use amount.

10. A calculator device for calculating an index value indicating a processing cost or environmental load in a system having a plurality of hardware components used by a plurality of processes or users, comprising:
a specification part for specifying which hardware component of said plurality of hardware components the designated process or user uses;
an index value acquisition part for acquiring the index value of each of the specified hardware components; and
a calculation part for calculating the index value for the designated process or user in said system by totaling said index value of each of the specified hardware components.

11. A calculation method for calculating an index value indicating a processing cost or environmental load in a system having a hardware component used by a plurality of processes or users, comprising:
acquiring the index value of said hardware component;
acquiring, for each of said plurality of processes or users, at least one observation value changing depending on the use of said hardware component by said process or user; and
calculating the use amount of said hardware component by each of said plurality of processes or users based on said acquired observation value, and calculating the index value by the designated process or user in said hardware component by distributing the index value acquired at said index value acquisition step according to said use amount.

12. A program product for enabling a computer to function as a calculator device for calculating an index value indicating a processing cost or environmental load in a system having a hardware component used by a plurality of processes or the users, said program product comprising:
an index value acquisition part for acquiring the index value for said hardware component;
an observation value acquisition part for acquiring, for each of said plurality of processes or users, at least one observation value changing depending on the use of said hardware component by said process or user; and
a calculation part for calculating the use amount of said hardware component by each of said plurality of processes or users based on said acquired observation value, and calculating the index value by the designated process or user in said hardware component by distributing the index value acquired by said index value acquisition part according to said use amount.
